# EUROPEAN PATENT APPLICATION

(11) **EP 4 455 639 A1**
(43) Date of publication of application: **30.10.2024**
(21) Application number: 23315122.4
(22) Date of filing: 27.04.2023
(51) Int. Cl.: G01N 21/64, G02B 21/00

(54) **SINGLE-PARTICLE LOCALIZATION MICROSCOPE**

(71) Applicant: Leica Microsystems CMS GmbH, 35578 Wetzlar (DE); Bioaxial SAS, 75010 Paris (FR)
(72) Inventor: Sirat, Gabriel, 75010 Paris (FR); Sperber, Tom, 75010 Paris (FR); Moisan, Lionel, 75010 Paris (FR); Dyba, Marcus, 35578 Wetzlar (DE)
(74) Representative: Schaumburg und Partner Patentanwälte mbB

(57) **Abstract**

A single-particle localization microscope (100) comprises a light source (108) configured to generate illumination light (110) for illuminating a sample region (120), and an optical illumination system (102) configured to shape the light into a localizing light distribution (240) having a substantially zero intensity minimum (242) at a target point (244) within the sample region (120), the localizing light distribution (240) being adapted to cause a single particle (122) in a fluorescent state located in the sample region (120) outside the intensity minimum (242) to emit fluorescent light. The optical illumination system (102) is further configured to shape the light into an auxiliary light distribution (340) having a non-zero intensity at the target point (244) such that the auxiliary light distribution (340) is defined in its spatial extent and/or in its shape by the localizing light distribution (240).

## Description

### Technical field

The invention relates to a single-particle localization microscope and a method for localizing a single particle in a sample region.

### Background

In the field of light microscopy, methods have become available that allow to localize individual particles with spatial resolution below the diffraction limit. These methods can be used for single particle tracking of diffusion particles and super-resolution imaging. For instance, a technology for super-resolution fluorescence imaging is based on conical diffraction that takes place when a polarized light beam is diffracted through a biaxial crystal. This technology is known among experts by the acronym CODIM (Conical Diffraction Microscopy).

The CODIM technology allows to create of a variety of light distributions which are beneficial in several systems. For example, the technology is used in a system called LiveCodim which provides a universal, super-resolution imaging platform configured to interface with any standard fluorescence microscope. Methods for tracking particles with minimal photon fluxes are often referred to as dark tracking. This category also includes an approach commonly known as MINFLUX where the technology is applied to create a doughnut shaped light distribution. As a pivotal component, a method called black fluorophore imaging is known in the art, the latter applying the same concepts as MINFLUX.

Methods as explained above are disclosed e.g. in WO 2012/049381 A2, WO 2013/153294 A1, WO 2019/043458 A2, and WO 2018069283 A1. Further, reference is made to the publications of Julien Caron et al., Conical diffraction illumination opens the way for low phototoxicity super-resolution imaging, Cell Adhesion & Migration (2014), pages 430 - 439, DOI: 10.4161/cam.29358; Clément Fallet et al., Conical diffraction as a versatile building block to implement new imaging modalities for superresolution in fluorescence microscopy, Nanoimaging and Nanospectroscopy II (2014), Proc. of SPIE Vol. 9169, 916905; and Francisco Balzarotti et al., Nanometer resolution imaging and tracking of fluorescent molecules with minimal photon fluxes, Science (2016), DOI 10.1126/science.aak9913. MINFLUX approaches are disclosed e.g. in WO 2013/072273 A1, WO 2018/069283 A1, WO 2015/097000 A1, WO 2017/153430 A1, and in the publication of K. C. Gwosch et al., Nature methods, 2019, doi 10.1038/s41592-019-0688-0.

Typical illumination light distributions used in the above localization methods include, for example, half-moon, doughnut or vortex-like patterns having a zero intensity minimum in the center. When such a localizing light distribution is applied to a sample, a single particle in a fluorescent state is induced to emit fluorescent light, provided that the particle is located outside the zero intensity minimum but the particle is illuminated with (at least a part of) the illumination light. On the other hand, if the particle is located coincident with the zero intensity minimum of the localizing light distribution, the particle is not excited to emit fluorescent light and no light is detected. This principle enables single-particle localization within the framework disclosed herein.

In addition to a localizing light distribution having a central intensity minimum, other light distributions are often required to implement single-particle localization. These distributions may be required either at the same wavelength, or, in some cases at a different wavelength. For instance, it may be necessary to transfer the particles from a fluorescent state to a non-fluorescent state as known from methods such as GSDIM / dSTORM microscopy. Thus, conventional localization systems usually require several independent optical paths to fulfill all necessary functions, in particular to offer different light distributions at the same time. This creates high demands on the tolerances and complexity of a localization system that aims for high resolution in the nanometer range.

### Summary

It is an object to provide a single-particle localization microscope that allows different illumination light distributions, at the same wavelength or at different wavelengths, to be generated fast and with a simple optical setup.

The afore-mentioned object is achieved by the single-particle localization microscope according to claim 1. Advantageous embodiments are defined in the dependent claims and the following description.

A single-particle localization microscope comprising a light source is configured to generate illumination light for illuminating a sample region, and an optical illumination system is configured to shape the illumination light into a localizing light distribution having a substantially zero intensity minimum at a target point, in two or three dimensions, within the sample region. The localizing light distribution is adapted to cause a single particle in a fluorescent state located in the sample region outside the intensity minimum to emit fluorescent light. The optical illumination system is further configured to shape the illumination light into an auxiliary light distribution having a non-zero intensity at the target point such that the auxiliary light distribution is defined in its spatial extent by the localizing light distribution.

With the auxiliary light distribution, the solution presented herein provides for a new light pattern that can be added to an existing library including multiple light distributions used in applications such as dark tracking, MINFLUX, black fluorophore imaging etc. The auxiliary light distribution is complementary to the localizing light distribution in that it has a non-zero intensity exactly where the localizing light distribution has its central zero. Furthermore, the auxiliary light distribution is confined in its spatial extent by the localizing light distribution. Therefore, it can be easily integrated in applications specifically designed for the spatial extent of the localizing distribution.

According to a preferred embodiment, the optical illumination system comprises a beam shaper which is configured to shape the localizing light distribution and the auxiliary light distribution by selectively adjusting a polarization handedness of the illumination light relative to a wavefront handedness of the illumination light. Having realized that the above manipulation of the handedness enables the auxiliary light distribution to be generated, it is possible to expand the variety of available light distributions with a simple optical setup. In fact, both light distributions can be generated by controlling the beam shaper alone. Thus, essentially no changes to the hardware required.

Preferably, the beam shaper is configured to generate the localizing light distribution by modifying the illumination light to have a circular polarization of a first handedness which is adapted to a predefined wavefront handedness. Furthermore, the beam shaper may be configured to generate the auxiliary light distribution by modifying the illumination light to have a circular polarization of a second handedness which is opposite to the first handedness.

According to preferred embodiment, the beam shaper is configured to shape the localizing light distribution as an optical vortex or a half-moon pattern.

An optical vortex constitutes a light distribution as typically used, for example, in stimulated emission depletion (STED) microscopy. In the present context, it is to be noted that an optical vortex exhibits a helical wavefront having a specific handedness, meaning that the optical vortex is either right-handed or left-handed. To create the optical vortex representing the desired localization light distribution having a central zero on the light propagation axis, the circular polarization of the illumination light is selected so that its handedness corresponds to the handedness of the helical wavefront propagation. In other words, if the helical wavefront is right-handed (or left-handed), the handedness of the circular polarization is also chosen to be right-handed (or left-handed). When generating the auxiliary light distribution, on the other hand, the handedness of the circular polarization is chosen to be opposite to the handedness of wavefront propagation. Thus, if the wavefront is right-handed (or left-handed, respectively), the handedness of the circular polarization is chosen to be left-handed (or right-handed, respectively).

When an opposite handedness is adjusted, the auxiliary light distribution may be described as constituting a failed or distorted vortex representing a substantially homogenous intensity distribution having a non-zero intensity on the propagation axis. Furthermore, since the auxiliary light distribution is generated essentially in the same way as the localization light distribution, except for the different handedness, the spatial extent of the failed vortex representing the auxiliary light distribution is substantially the same as the spatial extent of the proper vortex representing the localization light distribution. This applies especially in high NA optics, as typically used in super-resolution microscopy, due to symmetries of the longitudinal field component.

As an alternative, the localization light distribution may be shaped e.g. as a half-moon pattern. Such a half-moon pattern forms a beam spot comprising two intensity maxima symmetrically opposed from a central symmetry axis given by a perpendicular bisection passing through a midpoint of a line connecting the two intensity maxima.

Such a half-moon pattern may be generated by the beam shaper in the form of linear polarized illumination light. To switch from the localizing light distribution shaped in a half-moon pattern to the auxiliary light distribution, the polarization of the illumination light is changed from linear polarization to circular polarization of a predetermined handedness.

According to a preferred embodiment, the optical illumination system comprises a single optical path along which the light forming the localizing light distribution and the light forming the auxiliary light distribution propagate from the beam shaper toward the sample region. This configuration that is based on the capacity to create all required spot shapes and/or sizes (or illumination distributions) by the beam shaper, allows to significantly simplify the system by providing only one single optical path, even if multiple wavelengths are used.

Preferably, the beam shaper may comprise an electro-optic device configured for conical diffraction. Applying CODIM technology allows to create a library including a variety of different light distributions. Based on the solution presented here, a new light pattern in the form of the auxiliary light distribution can be added to this library without having to significantly change the optical setup.

The beam shaper may include a dynamic polarization adapter downstream of the electro-optic device. According to this embodiment, the handedness of the output polarization is manipulated with respect to the wavefront handedness of the illumination light. However, it is also conceivable to manipulate the wavefront handedness of the illumination light with respect to the handedness of the polarization. For this purpose, a suitable optical element capable of modifying the wavefront handedness e.g. by a controllable optical retarder, for instance a λ/4 plate or a λ/2 plate, as for example a Pockels cell or a Liquid Crystal Light Valve, may be provided upstream or downstream of the electro-optic device.

It should be noted that the use of an electro-optic device for beam shaping is merely an example. Instead, another beam shaping device, such as an elasto-optic device, may be used.

According to an alternative embodiment, the optical illumination system is configured to combine illumination light propagating along a first optical path and forming the localizing light distribution in the sample region with illumination light propagating along a second optical path and forming an Airy light distribution in the sample region in order to shape the auxiliary light distribution in the sample region, the combined illumination light propagating toward the sample region along a common beam path in which the first optical path and the second optical path are merged.

Typically, one or more continuous-wave light sources may be used. More specifically, the illumination light may be modulated at the rate of the system, typically tens or hundreds of microseconds. However, also pulsed light sources can be used, for instance if FLIM (fluorescence lifetime imaging microscopy) is considered.

The light source may be configured to generate the light with only one single predefinable wavelength or a - preferably continuous - wavelength band having a wavelength width being smaller than a predefinable value. In case that the light source emits a wavelength band, the latter is preferably continuous. Furthermore, the aforementioned value defining the wavelength width is preferably being smaller than 50 nm.

The light source may also comprise a plurality of light source units, each light source unit being configured to generate light of a distinct wavelength. The inherent achromaticity of the technology may allow to merge the plurality of wavelengths in a single path.

According to another aspect, a method for localizing a single particle in a sample region is provided. The method comprising the following steps: generating light to illuminate the sample region, wherein illuminating the sample region is performed by shaping the light into a localizing light distribution having a substantially zero intensity minimum at a target point within the sample region, the localizing light distribution being adapted to cause a single particle in a fluorescent state located in the sample region outside the intensity minimum to emit fluorescent light; and shaping the light into an auxiliary light distribution having a non-zero intensity at the target point such that the auxiliary light distribution is defined in its spatial extent and/or its shape by the localizing light distribution.

The steps for shaping the light into the localizing light distribution and the auxiliary light distribution is not limited with respect to the order of these steps. In other words, the localizing light distribution may be generated before the auxiliary light distribution or vice versa.

Preferably, single-particle localization is performed based on fluorescent light which is detected in response to the illumination of the sample region with the localizing light distribution. The sample region is illuminated with the auxiliary light distribution to perform an auxiliary light manipulation of the sample region other than illuminating the sample region with the localizing light distribution for single-particle localization.

The afore-mentioned auxiliary light manipulation may serve e.g. to transfer a particle from a fluorescent state to a non-fluorescent state and vice versa. The auxiliary light manipulation may comprise a step of illuminating the sample region with the auxiliary light distribution at a predetermined intensity. Fluorescent light may be detected in response to the illumination of the sample region with the auxiliary light distribution. Positioning of the sample region and/or the target region may be controlled prior to single-particle localization based on an intensity of the detected fluorescent light.

In case that the predetermined intensity mentioned above is applied for a so-called back pumping process, i.e. a transfer from the non-fluorescent state to the fluorescent state using light of short wavelength, this intensity is typically smaller than 10% or even 1% of the excitation light intensity.

According to a specific embodiment, the auxiliary light manipulation comprises a step of illuminating the sample region with the auxiliary light distribution at a wavelength different from the wavelength of the localizing light distribution. For example, if the auxiliary light distribution is to be applied to the sample to enable regeneration of the fluorophores during a localization process, the wavelength of the auxiliary light distribution is typically smaller than the wavelength of the localizing light distribution. The auxiliary light distribution is usually generated using light of one single wavelength or using light of a wavelength band.

The auxiliary light manipulation may comprise a step of illuminating the sample region with the auxiliary light distribution at an intensity suitable to transfer the single particle from the fluorescent state into a non-fluorescent state. Such an intensity may be comparable to intensities as applied in localization microscopy approaches such as PALM, STORM, or GSDIM.

According to another embodiment, the sample region is illuminated with the auxiliary light distribution during single-particle localization to detect an idle state in which no particle is present in the sample region.

### Short Description of the Figures

Hereinafter, specific embodiments are described referring to the drawings, wherein:
Hereinafter, specific embodiments are described referring to the drawings, wherein:
- Figure 1: a block diagram showing a single-particle localization microscope according to an embodiment;
- Figure 2: a schematic diagram illustrating a beam spot formed by an exemplary localization light distribution;
- Figure 3: a schematic diagram illustrating a beam spot formed by an exemplary auxiliary light distribution;
- Figure 4: a schematic diagram showing an exemplary implementation of the single-particle localization microscope;
- Figure 5: a diagram illustrating the intensity a largely homogeneous distribution as an example of the auxiliary light distribution;
- Figure 6: diagrams showing simulation results for the amplitude of an optical vortex and a homogenous distribution, respectively;
- Figure 7: diagrams showing simulation results for the amplitude a half-moon pattern;
- Figure 8: a flow diagram showing a method for single-particle localization according to an embodiment; and
- Figure 9: a block diagram showing an optical illumination system according to another embodiment.

### Detailed Description

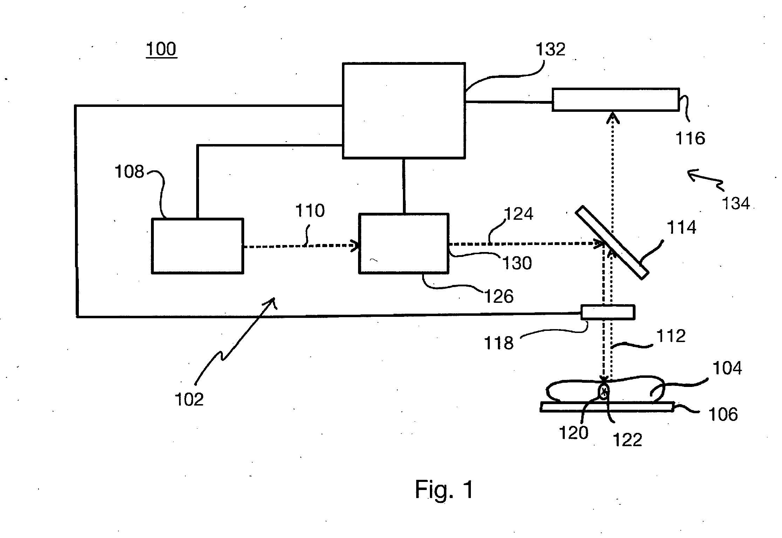

Figure 1 is a schematic diagram showing a single-particle localization microscope 100 according to an embodiment. The microscope 100 may be implemented as a configuration which is based on a widefield microscope or on a laser-scanning confocal microscope (LSCM) without being limited thereto. Figure 1 shows only those components of the single-particle localization microscope 100 which are helpful to understand the operating principle of the solution presented herein. Needless to say that the microscope 100 may include additional components not explicitly shown in the block diagram of Figure 1. For example, although not shown in Figure 1, the microscope 100 may include optical lenses such as a tube lens and an objective lens used both for illumination and detection as well as pinholes which serve to reduce the amount of out-of-focus light in image formation in accordance with a confocal set-up.

The microscope 100 comprises an optical illumination system 102 that is configured to illuminate a sample 104 which is arranged on a sample carrier 106. The optical system 102 includes a light source 108 which is configured to generate illumination light 110 in a wavelength range that is adapted to excite fluorophores included in the sample 104 to emit fluorescent light 112. The optical illumination system 102 may comprise a dichroic beam splitter 114 which is configured to reflect the illumination light 110 onto the sample 104 and to transmit the fluorescent light 112 toward a detector 116, or vice versa, the detector 116 being part of an optical detection system generally referred to as 134 in Figure 1. The optical illumination system 102 may further include a scanning device 118 such as a mirror arrangement, or an electro-optic or acousto-optic deflector, which is movable to scan the illumination light 110 over the sample 104. This allows individual points in the sample 104 to be scanned and imaged. Each point corresponds to a specific sample region 120 that is coincident with a focal region of the optical detection system 134 and includes a single fluorescent emitter 122 which is to be localized by means of the microscope 100. Since the fluorescent light 112 is returned to the scanning device 118 before being captured by the detector 116, the embodiment shown in Figure 1 is a so-called descanned configuration.

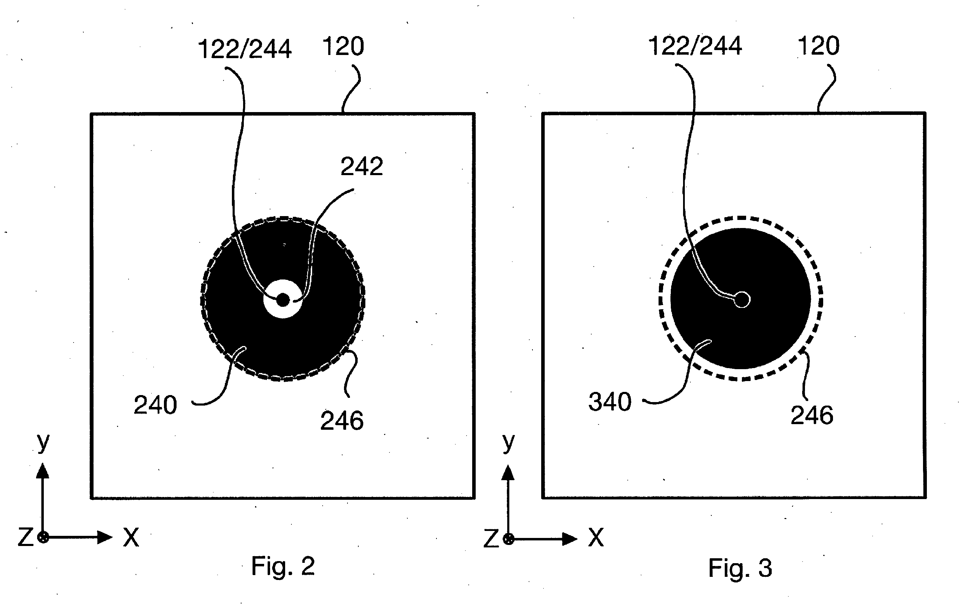

The optical illumination system 102 is configured to shape the illumination light 110, one the one hand, into a localizing light distribution 240 as schematically shown in Figure 2. The localizing light distribution 240 is used to localize the single fluorescent emitter 122 within the sample 104. On the other hand, the optical illumination system 102 is configured to shape the illumination light 110 into an auxiliary light distribution 340 as schematically shown in Figure 3. The auxiliary light distribution 340 is used to perform an auxiliary light manipulation of the sample region 120 other than illuminating the sample region 120 with the localizing light distribution for single-particle localization.

Figures 2 and 3 illustrate the localizing light distribution 240 and the auxiliary tight distribution 340, respectively, forming an illumination beam spot when projected onto a lateral x-y-plane, respectively, perpendicular to a z-axis / an optical axis, the latter being parallel to an axis along which the illumination light 110 propagates. Both light distributions 240, 340 illuminate the sample region 120 including the fluorescent emitter 122 to be localized. In Figures 2 and 3, for simplicity, portions of the light distributions 240, 340 whose intensities are not zero are shown in gray, while portions of light distributions 240, 340 where the intensity is substantially zero are shown in white.

As shown in Figure 2, the localizing light distribution 240 has a central intensity minimum 242 which is substantially zero. The intensity minimum 242 of the localizing light distribution 240 defines a target point 244 within the sample region 120. With increasing radial distance from the target point 244, the intensity of the localizing light distribution 240 first increases and then decreases again. According to the example shown in Figure 2, the radial spatial extent of the localizing light distribution 240, where the peripheral intensity has not yet dropped to zero, is assumed to be defined by a circle 246. Furthermore, in this example, the fluorescent emitter 122 is assumed to be spatially coincident with the target point 244 and thus with the central intensity minimum 242 of the localizing light distribution 240. Therefore, the fluorescent emitter 122 is not excited by the localizing light distribution 240 to emit fluorescent light in the state shown in Figure 2. To cause the emitter 122 to emit fluorescent light, the emitter 122 must be located in a region where the intensity of localizing light distribution 240 is different from zero.

As shown in Figure 3, unlike the localizing light distribution 240, the auxiliary light distribution 340 has a non-zero intensity at the target point 244. Furthermore, the auxiliary light distribution 340 is generated in such a way that it is limited in its spatial extent to the spatial extent of the localizing light distribution 240. Thus, in Figure 3, the auxiliary light distribution 340 shown in gray does not extend radially beyond circle 246.

Figure 2 illustrates an example in which the localizing light distribution 240 is given by an optical vortex such as used e.g. in STED applications. An optical vortex represents light that is twisted like a corkscrew around the axis of light propagation. Accordingly, a specific handedness is assigned to the optical vortex. Thus, with respect to the light propagation direction, the optical vortex is either right-handed or left-handed. Due to the twisting, the light waves on the propagation axis cancel each other out. When projected onto the x-y-plane, the optical vortex creates a doughnut light distribution or a ring-like beam spot having a zero in the center. However, it should be noted that such a localizing light distribution is merely exemplary. As will be explained below, the localizing light distribution may also form a different pattern, provided that it is ensured that the distribution has the zero intensity minimum as described above.

Referring again to Figure 1, the illumination optical system 102 may comprise a beam shaper 126 to be capable of shaping the illumination light 110 into the desired localizing light distribution 240 with its zero-intensity minimum 242. In particular, the beam shaper 126 may be configured to shape these light patterns by modulating a polarization of the illumination light 110. The beam shaper 126 may include an electro-optic device which is configured to perform sequential beam shaping of the illumination light 110 emitted from the light source 108. According to a specific embodiment, the beam shaper 126 is operated according to the principle of conical diffraction in order to shape the illumination light 110 sequentially into predetermined light patterns.

The microscope 100 further includes a processor 132 which may be used to control the microscope operation as a whole. According to the present embodiment, the processor 132 specifically controls the light source 108, the beam shaper 126, the scanning device 118, and the detector 116 in a way that allows the single emitter 122 to be localized in the sample region 120.

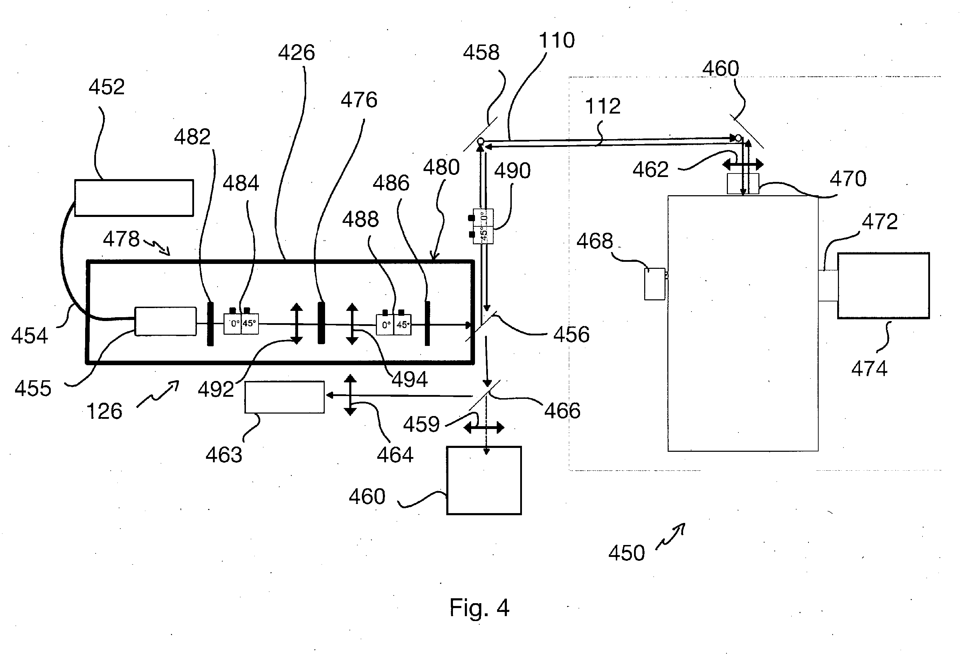

Figure 4 is a schematic diagram illustrating an implementation of the single-particle localization microscope 100 of Figure 1 in more detail. According to this specific implementation, the beam shaper 126 is formed from a module which is connectable to a conventional widefield microscope 450 having a modular design. Due to its modular design, the microscope 450 may be equipped with components allowing an implementation as a laser-scanning confocal microscope. In other words, the components of the configuration shown in Figure 4 may be shared between a widefield setup and a confocal setup. It should be noted that the configuration shown in Figure 4 is only to be understood as an exemplary implementation. In particular, the following description does not depend in detail on the specific configuration of the microscope 450 on which the beam shaper 126 is plugged.

The microscope 450 may comprise a laser bench 452 (corresponding to the laser source 108 in Figure 1) that is connected to the beam shaper 126 via an optical fiber 454. The illumination light 110 propagating through the optical fiber 454, after being collimated by a collimator 455, is influenced by the beam shaper 126 such that the sample is selectively illuminated with the localizing light distribution 240 and the auxiliary light distribution 340 as shown Figures 2 and 3, respectively. The illumination light 110 output from the beam shaper 126 is deflected by a dichroic mirror 456 (corresponding to the dichroic mirror 114 in Figure 1) onto a piezoelectric mirror 458 (corresponding to the scanning device 118 in Figure 1). After reflection at the piezoelectric mirror 458 and a mirror 460, the illumination light 110 propagates through a lens 462 onto the sample. By moving the piezoelectric mirror 458, the illumination light 110 scans over the sample (not shown in Figure 4).

The fluorescent light 112 emitted from the sample is returned via the lens 462 and the mirror 460 to the piezoelectric mirror 458. After reflection at the piezoelectric mirror 458, the fluorescent light 112 having a wavelength different from the wavelength of the illumination light 110 transmits the dichroic mirror 456 and is reflected by a mirror 466 through a lens 464 toward a photon counter 463 (corresponding to the detector 116 in Figure 1). Thus, the fluorescent light 112 is detected by the photon counter 463 in a descanned configuration.

In addition to the aforementioned components, the microscope 450 shown in Figure 4 may include a variety of optional components such as a camera 460 with a lens 459 arranged in front of it. To direct the fluorescent light 112 to the camera 460 instead of the photon counter 463, the mirror 466 may be selectively removed from the optical path of the fluorescent light 112. Furthermore, the microscope 450 may include multiple input ports 468, 472 for connecting external components such as a wide-field camera 474. The illumination light 110 is supplied to the sample through an input port 470.

The beam shaper 126 may include an electro-optic device 426 that is configured for conical diffraction. The electro-optic device includes 426 includes a biaxial crystal 476 arranged between two controllable polarizers. A first controllable polarizer is formed from a polarization state generator (PSG) 478 comprising a vertical linear polarizer 482 followed by a double Pockels cell 484 arranged in this order in front, i.e. upstream of the biaxial crystal 476. A second controllable polarizer is formed from a polarization state analyzer (PSA) 480 which is laid out in reverse order. Thus, the polarization state analyzer 480 comprises a double Pockels cell 488 followed by a horizontal linear polarizer 486 arranged in this order behind, i.e. downstream of the biaxial crystal 476. The polarizing state generator 478 and the polarizing state analyzer 480 form a polarizing optical system which enables manipulation of both input and output polarizations. The electro-optic device 426 further includes a lens 492 upstream of the biaxial crystal 476 and a lens 494 downstream of the biaxial crystal 476.

Furthermore, the beam shaper 126 may comprise a dynamic polarization adapter, 490 arranged downstream of the electro-optic device 426. The dynamic polarization adapter 490 may be formed from a double Pockels cell and serves to control an output polarization of the illumination light 110 emerging from the electro-optic device 426.

The processor 132 (see Figure 1) is adapted to control the double Pockels cells used in the components 484, 488, and 490 electronically, allowing to control the polarization without moving mechanical parts in the beam shaper 126. This optical set-up is adapted to switch, in a very short time, from one light pattern to another light pattern, in particular from the localizing light distribution 240 and the auxiliary light distribution 340 and vice versa. More specifically, the processor 132 is configured to cause the beam shaper 126 to create both the localizing light distribution 240 and the auxiliary light distribution 340 as illustrated by way of an example in Figures 2 and 3.

In case that the distribution 240 is to be generated in the form of an optical vortex, the beam shaper 126 is controlled to adjust the polarization of the illumination light 110 to be circular and at an adequate handedness with respect to a wavefront handedness of the optical vortex, the latter being determined by a twisting direction of the wavefront of the optical vortex. In other words, the handedness of the circular polarization of the illumination light 110 is controlled such that it is adapted to the handedness of the optical vortex. This matched circular polarization is referred to hereinafter as localizing circular polarization. When the localizing circular polarization is adjusted by means of the beam shaper 126, it is ensured that the localizing light distribution 240 has a nearly perfect minimum of zero intensity.

On the other hand, the inventors have found that when the beam shaper 126 sets the handedness of the circular polarization of the illumination light 110 to be opposite to the handedness of the localizing circular polarization, a substantially homogenous light distribution is created having the characteristics of the auxiliary light distribution 340 as illustrated in Figure 3. This characteristic is determined by a non-zero intensity at the target point 224, where the localizing light distribution 240 is zero, and a spatial extent substantially limited to the spatial extent of the localizing light distribution 240.

According to the specific example shown in Figure 4, the handedness of the circular polarization of the illumination light 110 may be finally controlled by the dynamic polarization adapter 490. For instance, assumed that the optical vortex representing the localization light distribution 240 that is to be generated is right-handed, the dynamic polarization adapter 490 adjusts the handedness of the circular polarization of the illumination light 110 to be right-handed likewise. As a result, the desired optical vortex is created in the sample. If, one the other hand, the sample is to be illuminated with the auxiliary light distribution 340, the dynamic polarization adapter 490 is controlled to adjust the handedness of the circular polarization of the illumination light 110 to be left-handed in this example. Then, a failed or distorted vortex is created in the sample.

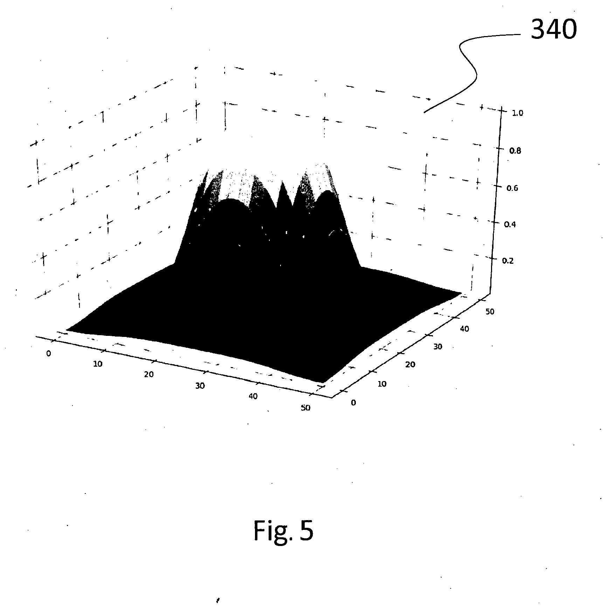

Figure 5 shows an example of the intensity of the auxiliary light distribution 340 produced when a circular polarization is applied that is opposite to the localizing circular polarization used to form the optical vortex. As shown in Figure 5, the auxiliary light distribution 340 can be described as having the shape of a top-hat. Such a top-hat pattern has an intensity maximum or plateau that coincides with the intensity minimum of the optical vortex. It can advantageously be used as an auxiliary pattern. Importantly, the auxiliary pattern can be generated quickly and easily by simply controlling the beam shaper 126. In other words, the same hardware and control system can be used as for generating the vortex pattern.

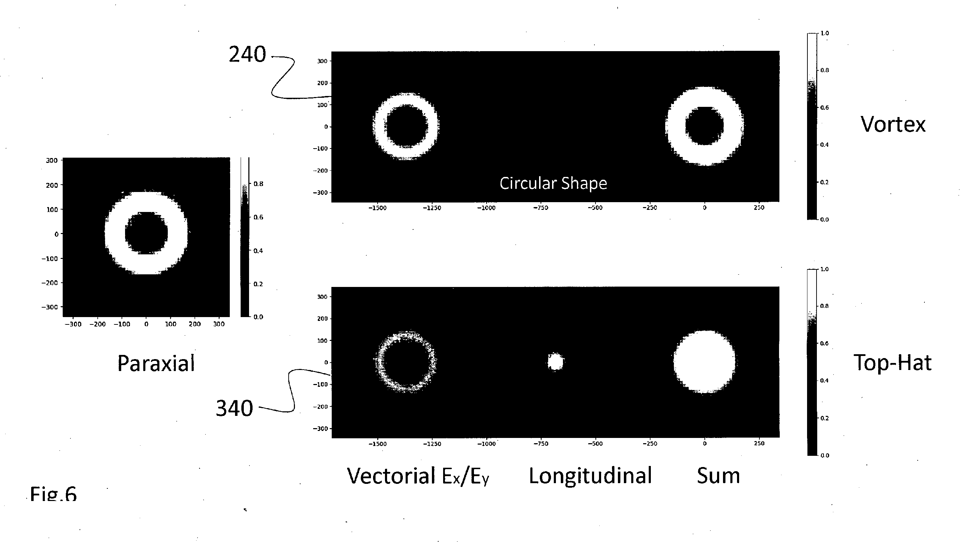

Figure 6 show results of simulations carried out by the inventors to investigate how the homogenous auxiliary pattern of Figure 5 can be created starting from the localizing light distribution 240 represented by an optical vortex. For this purpose, an influence of the output polarization on the spot shape was analyzed. Considering high-numerical (NA) objectives (NA = 1.4 in this case), scalar (paraxial) theory (shown on the left) was replaced be a vectorial theory not neglecting the longitudinal field (shown on the right).

As already mentioned above, the localizing light distribution 240 is not limited to an optical vortex. Rather, a suitable control of the beam shaper 126 based on CODIM technology allows for the creation of a variety of light distributions having the desired characteristics including a central zero.

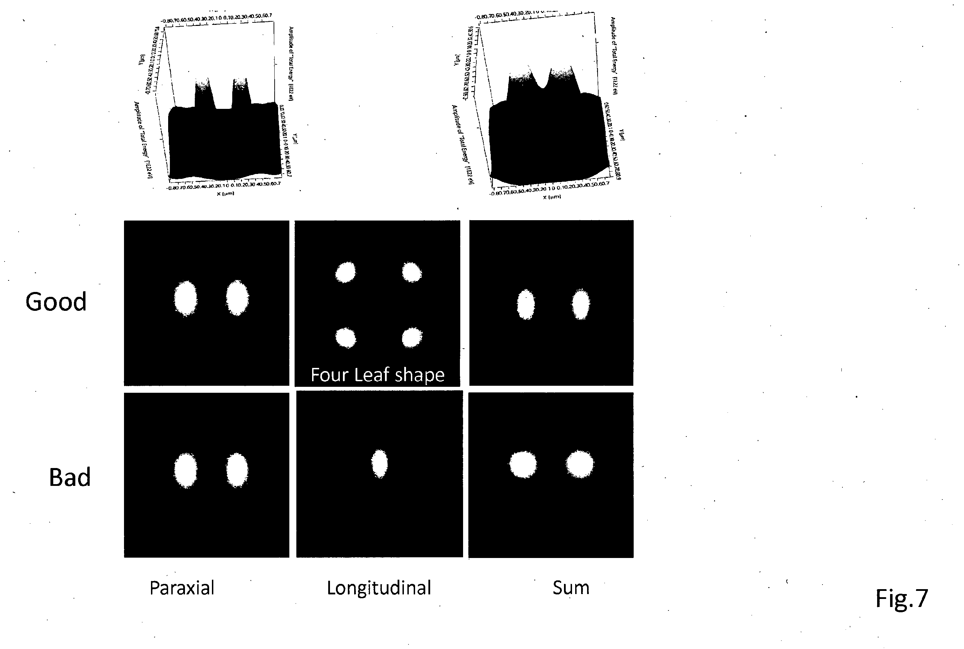

Figure 7 shows results of the amplitude of beam shapes for an example where the localizing light distribution 240 is shaped in a half-moon pattern. The half-moon pattern creates a beam spot comprising two intensity maxima symmetrically opposed from a central symmetry axis given by a perpendicular bisection passing through a midpoint of a line connecting the two intensity maxima. In Figure 7, the contrast of the half-moons is shown as a function of the linear polarization angle in paraxial and vectorial formalism. As can be seen from Figure 7, when applying the suitable polarization, the longitudinal field acquires a four-leaf symmetry so that the contrast of the half-moon is theoretically not limited.

The microscope 100 can be used to perform a method localizing a single particle in the sample region 120. Generally speaking, for the actual localization, the sample is illuminated with the localizing light distribution 240. In contrast, for other light manipulation not specifically intended for super-resolution localization, the auxiliary light distribution 340 is applied to the sample.

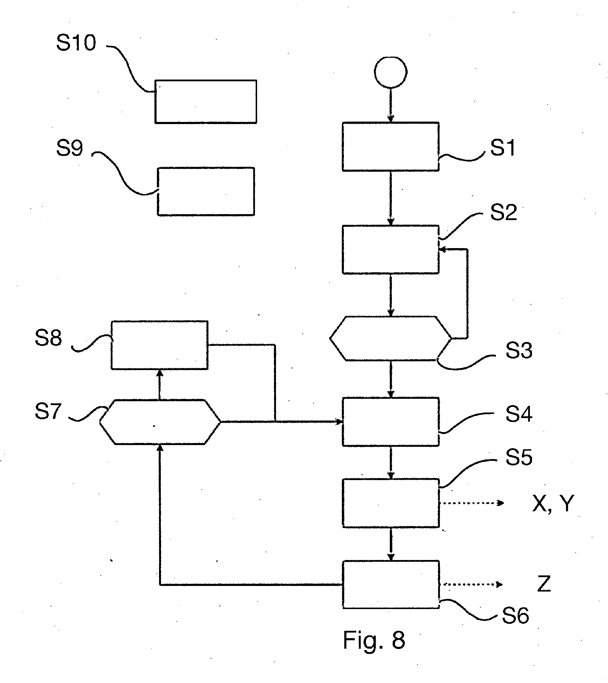

Figure 8 shows a specific example of such a method, which includes the use of both localizing light distribution 440 and auxiliary light distribution 340. In the following example, it is assumed that the localizing light distribution 240 is formed from a half-moon pattern, while the auxiliary light distribution 340 is represented by a largely homogeneous distribution, as explained above with reference to Figures 5 through 7.

In step S1, a homogenous spot is applied to the sample to perform a rough positioning procedure. Typically, the position of a scene or a part of the sample 104 to be measured must be determined in a relatively large field of view which might span several (tens of) micrometers. A control of the accuracy of positioning just before the actual measurement procedure allows to compensate for all positioning tolerances of the system. The control of the position can be assessed by projecting the homogenous distribution with low power onto the sample while moving the top-hat spot laterally by means of the piezoelectric mirror 458 (see Figure 4) and finding the maximum intensity of the detected fluorescence light as a function of position.

In step S2, the homogenous distribution is applied to the sample with high-power to achieve an excitation and dark state transformation wherein the fluorophores present in the sample are depleted. Then in step S3, it is determined (e.g. by the photon counter 463 shown in Figure 4) whether or not the number of detected fluorescence photons is below a predetermined threshold. The homogenous spot is applied to the sample until the number of fluorescence photons detected is below the threshold. If the number of photons is below the threshold, it can be assumed that only one fluorophore is not in the dark state so that it can be localized. The change from the low-power position detection in step S1 to the high-power dark state transformation in step S2 can be achieved by simply increasing the laser power. Therefore, it is ensured that the homogenous spots applied in steps S1 and S2 spatially overlap.

In step S4, the actual localization measurement is performed. For this purpose, a half-moon triplet measurement is performed, which means that three half-moon patterns are successively applied to the sample in different angular orientations, the latter being represented in polar coordinates (r, ϕ). Each half-moon pattern may form a beam spot that comprises two intensity maxima symmetrically opposed from a central symmetry axis. This axis is represented by a perpendicular bisection which passes through a midpoint of a line connecting the two intensity maxima. Based on the fluorescence intensities which are detected for the three spots, the radial position r of the fluorescent emitter in the x-y-plane is calculated.

In step S5, a disambiguation procedure may be executed. The background of this procedure is that the localization in step S4 is subject to an ambiguity uncertainty with respect to the localization of the emitter position. Thus, when calculating an emitter position based on the sequence of fluorescence intensities detected in response to the sequence of the three half-moon patterns, multiple potential emitter positions may be determined that equally match the measured fluorescence intensities for symmetry reasons, and it is not clear which of these positions represents the actual emitter position. Therefore, in step S5, an asymmetrical light pattern might be applied to the sample. Based on the additional fluorescence intensity measured in response to the asymmetrical pattern, the correct x-y-position of the emitter can be determined. Like the localizing light distribution 240 and the auxiliary light distribution 340, the asymmetrical pattern can also be generated by means of the beam shaper 126.

In step S6, the sample may be illuminated with an additional, axially-variant light pattern generated by means of the beam shaper 126 to measure the axial z-position of the emitter.

In step S7, the number of fluorescence photons detected is queried. If the photon number is determined to above a threshold, the process returns to step S4. If the photon number equal to or smaller than the threshold, the process proceeds to step S8.

In step S8, a procedure for regenerating the fluorophores is executed by applying a top-hat distribution having a wavelength which differs from the wavelength of the top-hat distribution applied in the previous steps. For instance, while in step S2 for excitation and dark state transformation, a wavelength of 640 nm may be applied, regeneration of the fluorophores in step S8 may be achieved with a wavelength of 405 nm. It should be noted that in step S8, a regenerated spot is created at the exact position to which the light was previously applied.

The method shown in Figure 8 is merely an example. It serves to illustrate the benefits that can be achieved by shaping the localizing light distribution 240 and the auxiliary light distribution 340 as described above. Some of the steps are optional, and additional steps can be provided.

As an additional step, for example, the auxiliary light distribution 340 e.g. in the form of the top-hat spot can be used to implement an in-measurement control which is denoted in Figure 8 as isolated step S9. Thus, the top-hat distribution can be used to probe if a fluorophore is present in the scene or sample region or not. If a fluorophore is located within the beam spot, it can be measured using the procedure explained above. If no fluorophore is present, an idle state is assumed, and the system will wait. This is an auxiliary step simplifying the management of the system during measurement, especially during idle time between the steps.

As an additional step, for example, the auxiliary light distribution 340 e.g. in the form of the top-hat spot can be used to implement an intensity-measurement control which is denoted in Figure 8 as isolated step S10. Thus, the top-hat distribution can be used to probe the fluorophore intensity. This is an auxiliary step simplifying the management of the system during measurement, especially if energy variations occur.

According to the embodiments described above, the optical illumination system 102 operates with a single optical path along which the illumination light 110 is directed to the sample to create either the localizing light distribution 240 or the auxiliary light distribution 340 therein. The use of a single optical path is made possible by the fact that the beam shaper 126 is capable of selectively creating both light distributions 240, 340 in cooperation with the other optical elements of the system, in particular the illumination objective facing the sample.

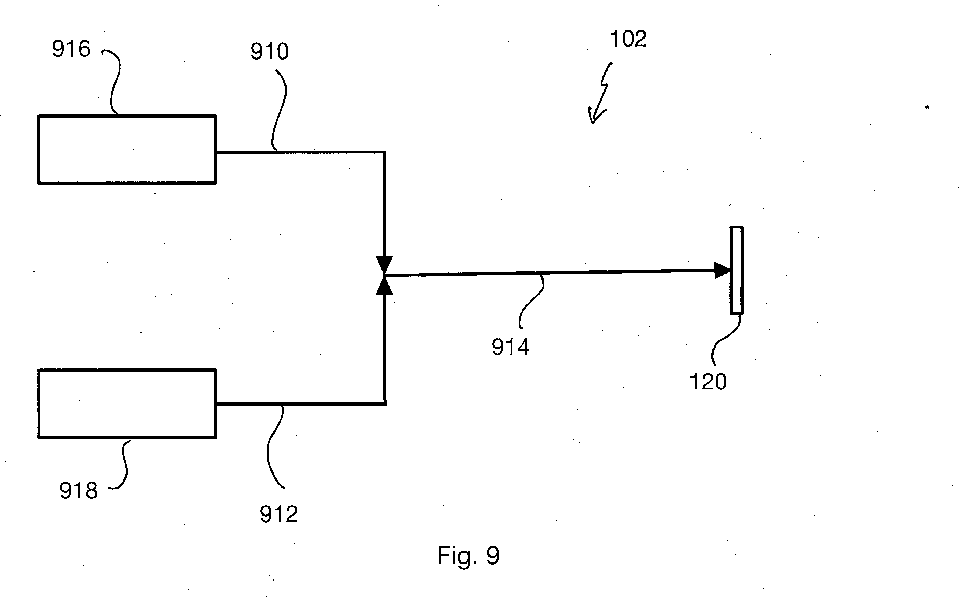

In an alternative embodiment, the optical illumination system 102 may have two separate optical paths to create the auxiliary light distribution 340 as schematically shown in Figure 9.

As shown in Figure 9, the optical illumination system 102 may be configured to merge two separate optical paths 910 and 912 into one common optical path 914 directing the illumination light onto the sample region 120. The optical illumination system 102 may comprise two light source units 916 and 918 emitting the illumination light. To create the localizing light distribution 240, the first light source unit 916 emits the illumination light into the first optical path 910. The localizing light distribution 240 may be shaped substantially in the same manner as explained above, i.e. by means of an electro-optic device that is configured for conical diffraction and thus capable of producing an optical vortex or a halfmoon pattern. When the localizing light distribution 240 is generated, the second optical path 912 is not in operation.

In contrast, for shaping the auxiliary light distribution 340, both optical paths 910 and 912 are in operation. Thus, the first light source unit 916 emits illumination light into the first optical path 910 so that an optical vortex or a half-moon pattern is produced in the sample region 120. In addition, the second light source unit 918 emits the illumination light into the second optical path 912. The illumination light propagating along the second optical path 912 reaches the sample region 120 as an Airy distribution.

Accordingly, the auxiliary light distribution 340 created in the sample region is a superposition of an optical vortex or a half-moon pattern and an Airy distribution. Since the Airy distribution has its maximum exactly where the optical vortex or the half-moon pattern has its central zero, the resulting auxiliary light distribution 340 has a non-zero intensity in the center. Furthermore, as the spatial extent of the Airy distribution is smaller than the spatial extent of the optical vortex or the half-moon pattern, the spatial extent of the resulting auxiliary light distribution 340 is defined solely by the vortex or the half-moon pattern.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of Reference Signs

- 100: single-particle localization microscope
- 102: optical illumination system
- 104: sample
- 106: sample carrier
- 108: light source
- 110: illumination light
- 112: fluorescent light
- 114: dichroic mirror
- 116: detector
- 118: scanning device
- 120: sample region
- 122: fluorescent emitter
- 126: beam shaper
- 132: processor
- 134: optical detection system
- 240: localizing light distribution
- 242: intensity minimum
- 244: target point
- 246: circle defining spatial extent
- 340: auxiliary light distribution
- 426: electro-optic device
- 450: widefield microscope or laser-scanning confocal microscope
- 452: laser bench
- 454: optical fiber
- 455: achromatic or chromatic collimator
- 456: dichroic mirror
- 458: piezoelectric mirror
- 459: lens
- 460: camera
- 463: photon counter
- 464: lens
- 466: mirror
- 468: input port
- 470: input port
- 472: input port
- 474: wide-field camera
- 476: biaxial crystal
- 478: polarization state generator
- 480: polarization state analyzer
- 482: vertical linear polarizer
- 484: double Pockels cell
- 486: horizontal linear polarizer
- 488: double Pockels cell
- 490: dynamic polarization adapter
- 492: lens
- 494: lens
- 910: optical path
- 912: optical path
- 914: common optical path
- 916: light source unit
- 918: light source unit

## Claims

1. A single-particle localization microscope (100), comprising:
a light source (108) configured to generate illumination light (110) for illuminating a sample region (120), and
an optical illumination system (102) configured to shape the light into a localizing light distribution (240) having a substantially zero intensity minimum (242) at a target point (244) within the sample region (120), the localizing light distribution (240) being adapted to cause a single particle (122) in a fluorescent state located in the sample region (120) outside the intensity minimum (242) to emit fluorescent light,
wherein the optical illumination system (102) is further configured to shape the light into an auxiliary light distribution (340) having a non-zero intensity at the target point (244) such that the auxiliary light distribution (340) is defined in its spatial extent and/or in its shape by the localizing light distribution (240).

2. The single-particle localization microscope (100) according to claim 1, wherein the optical illumination system (102) comprises a beam shaper (126) which is configured to shape the localizing light distribution (240) and the auxiliary light distribution (340) by selectively adjusting a polarization handedness of the illumination light (110) relative to a wavefront handedness of the illumination light (110).

3. The single-particle localization microscope (100) according to claim 2, wherein the beam shaper (126) is configured to generate the localizing light distribution (240) by modifying the illumination light (110) to have a circular polarization of a first handedness which is adapted to a predefined wavefront handedness.

4. The single-particle localization microscope (100) according to claim 3, wherein the beam shaper (126) is configured to generate the auxiliary light distribution (340) by modifying the illumination light (110) to have a circular polarization of a second handedness which is opposite to the first handedness.

5. The single-particle localization microscope (100) according to any one of the claims 2 to 4, wherein the beam shaper (126) is configured to shape the localizing light distribution (240) as an optical vortex or a half-moon pattern.

6. The single-particle localization microscope (100) according to any one of the claims 2 to 5, wherein the optical illumination system (102) comprises a single optical path along which the illumination light (110) propagates from the beam shaper (126) towards the sample region (120).

7. The single-particle localization microscope (100) according to any one of the claims 2 to 6, wherein the beam shaper (126) comprises an electro-optic device (426) configured for conical diffraction.

8. The single-particle localization microscope (100) according any one of the claims 2 to 7, wherein the beam shaper (126) includes a dynamic polarization adapter (490) downstream of the electro-optic device (426).

9. The single-particle localization microscope (100) according to any one of the preceding claims, wherein the optical illumination system (102) is configured to combine illumination light (110) propagating along a first optical path and forming the localizing light distribution (240) in the sample region (120) with illumination light (110) propagating along a second optical path and forming an Airy light distribution in the sample region (120) in order to shape the auxiliary light distribution (340) in the sample region (120), the combined illumination light (110) propagating toward the sample region (120) along a common beam path in which the first optical path and the second optical path are merged.

10. The single-particle localization microscope (100) according to any one of the preceding claims, wherein the light source (108) is configured to generate the light with only one single pre-definable wavelength or a - preferably continuous - wavelength band having a wavelength width being smaller than a predefinable value, the value preferably being smaller than 50 nm.

11. The single-particle localization microscope (100) according to any one of the preceding claims, wherein the light source (108) comprises a plurality of light source units, each light source unit preferably being configured to generate light of a distinct wavelength.

12. A method for localizing a single particle (122) in a sample region (120), comprising the following steps:
generating light to illuminate the sample region (120), wherein illuminating the sample region (120) is performed by
shaping the light into a localizing light distribution (240) having a substantially zero intensity minimum (242) at a target point (244) within the sample region (120), the localizing light distribution (240) being adapted to cause a single particle (122) in a fluorescent state located in the sample region (120) outside the intensity minimum (242) to emit fluorescent light, and
shaping the light into an auxiliary light distribution (340) having a non-zero intensity at the target point (244) such that the auxiliary light distribution (340) is defined in its spatial extent and/or its shape by the localizing light distribution (240).

13. The method according to claim 12, wherein single-particle localization is performed based on fluorescent light (112) which is detected in response to the illumination of the sample region (120) with the localizing light distribution (240), and
wherein the sample region (120) is illuminated with the auxiliary light distribution (340) to perform an auxiliary light manipulation of the sample region (120) other than illuminating the sample region (120) with the localizing light distribution (240) for single-particle localization.

14. The method according to claim 13, wherein the auxiliary light manipulation comprises a step of illuminating the sample region (120) with the auxiliary light distribution (340) at a predetermined intensity,
wherein fluorescent light is detected in response to the illumination of the sample region (120) with the auxiliary light distribution (340), and
wherein positioning of the sample region (120) is controlled prior to single-particle localization based on an intensity of the detected fluorescent light.

15. The method according to claim 13 or 14, wherein the auxiliary light manipulation comprises a step of illuminating the sample region (120) with the auxiliary light distribution (340) at a wavelength different from the wavelength of the localizing light distribution (240).

16. The method according to any one of the claims 13 to 15, wherein the auxiliary light manipulation comprises a step of illuminating the sample region (120) with the auxiliary light distribution (340) at an intensity suitable to transfer the single particle (122) from the fluorescent state into a non-fluorescent state.

17. The method according to any one of the claims 13 to 16, wherein the sample region (120) is illuminated with the auxiliary light distribution (340) during single-particle localization to detect an idle state in which no particle is present in the sample region (120).
